# EUROPÄISCHE PATENTSCHRIFT

(11) **EP 1 139 691 B1**
(45) Veröffentlichungstag und Bekanntmachung des Hinweises auf die Patenterteilung: **16.01.2008**
(21) Anmeldenummer: 01105938.3
(22) Anmeldetag: 09.03.2001
(51) Int. Cl.: H04Q 11/00

(54) **Busstation für ein optisches Bussystem**
Busstation for an optical bus system
Station de bus pour un système à bus optique

(30) Priorität: 31.03.2000 DE 10016173
(43) Veröffentlichungstag der Anmeldung: 04.10.2001
(73) Patentinhaber: ROBERT BOSCH GMBH, 70442 Stuttgart (DE)
(72) Erfinder: Vollmer, Vasco, 29471 Gartow (DE); Schunk, Nikolaus, Dr., 31139 Hildesheim (DE); Detlefsen, Wolfgang, Dr., 31139 Hildesheim (DE); Baierl, Wolfgang, 73630 Remshalden (DE)

(56) Entgegenhaltungen:
- EP-A- 0 942 545
- US-A- 5 892 893
- NAGATA Y ET AL: "CALL-BY-CALL ACTIVATION TECHNIQUE FOR FIBER-OPTIC SUBSCRIBER TRANSMISSION UNITS" IEEE TRANSACTIONS ON COMMUNICATIONS, IEEE INC. NEW YORK, US, Bd. COM-35, Nr. 12, Dezember 1987 (1987-12), Seiten 1297-1302, XP000842835 ISSN: 0090-6778

## Beschreibung

### Stand der Technik

Die Erfindung geht aus von einer Busstation für ein optisches Bussystem. Es sind bereits Busstationen für ein optisches Bussystem bekannt, bei dem teilweise eine Deaktivierung der Busstation erfolgt. Bei optischen Bussystemen muß jedoch auch in dem Ruhezustand sichergestellt werden, dass eine Weiterleitung von optischen Signalen erfolgt, da sonst alle nach der Busstation angeordneten Busstationen ebenfalls deaktiviert sind. Es mußte daher immer eine Restfunktionalität aufrechterhalten werden, die zur Erkennung von Adressen geeignet ist.

US-Patent 5 982 893 zeigt eine Busstation, welche in einen Ruhezustand, in dem weniger Energie verbraucht wird, versetzt werden kann. Zum Aufwecken der Busstation genügt das Erkennen einer nicht näher spezifizierten Aktivität auf dem Datenbus oder ein in der Busstation generiertes Aufwecksignal. Beide Aufwecksignale versetzen die Busstation in die volle Aktivität und sind damit Alternativen.

EP 942542 A2 beschreibt einen Busteilnehmer eines optischen Bussystems, welcher durch moduliertes Licht auf dem Bus von einem Standby-Modus in einen aktiven Modus versetzt wird. Auch hier wird der Busteilnehmer vollständig eingeschaltet.

### Vorteile der Erfindung

Demgegenüber hat die erfindungsgemäße Busstation mit den Merkmalen des unabhängigen Patentanspruchs den Vorteil, dass eine nahezu vollständige Deaktivierung der Busstation in einem Ruhezustand erfolgt. Der Energieverbrauch der Busstation kann daher sehr gering gehalten werden.

Vorteilhafte Weiterbildungen ergeben sich durch die Merkmale der abhängigen Patentansprüche. Durch das Vorsehen eines zweiten Ruhezustandes kann in Abhängigkeit von den

Anforderungen des Bussystems eine unterschiedlich starke Deaktivierung der Busstation und somit eine angepasste Verringerung des Energiebedarfs der Busstation erfolgen. Die Busstation kann entweder selbst oder in Abhängigkeit von externen Befehlen den ersten und/oder zweiten Ruhezustand aktivieren. Weiterhin kann vorgesehen sein, dass die Busstation in einem der Ruhezustände noch zur Weiterleitung von optischen Signalen geeignet ist.

### Zeichnungen

Ausführungsbeispiele der Erfindung sind in den Zeichnungen dargestellt und in den nachfolgenden Beschreibungen näher erläutert. Es zeigen
Figur 1 ein optisches Bussystem,
Figur 2 den internen Aufbau einer Busstation und
Figur 3 den Aufbau einer Eingangsstufe einer Busstation.

### Beschreibung

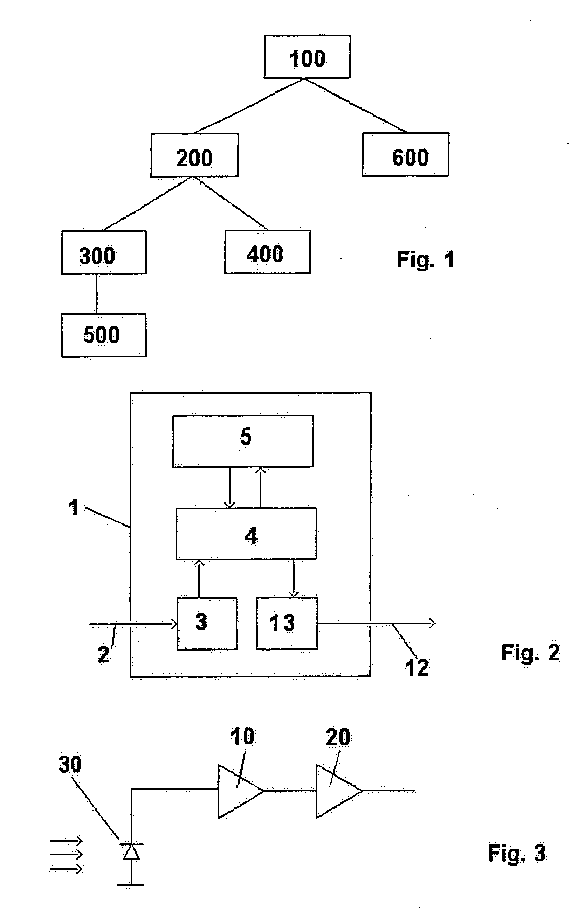

In der Figur 1 wird ein Bussystem mit mehreren Busstationen 100, 200, 300, 400, 500 und 600 gezeigt, bei dem die Verbindung zwischen den einzelnen Busstationen durch optische Leitungen, d.h. Lichtwellenleiter realisiert sind. Jede dieser Verbindungen erlaubt den Busstationen das Senden und Empfangen von Daten. Die Busstationen 400, 500 und 600 stehen jeweils nur mit einer Busstation in Verbindung, während die Busstationen 100, 200 und 300 mehr als eine Verbindung aufweisen. Um eine Datenkommunikation zwischen der Busstation 100 und den Busstationen 300, 400 und 500 zu ermöglichen muß die Busstation 200 so ausgebildet sein, dass sie Nachrichten, die es von der Station 100 erhält an die Stationen 300 und 400 weitergibt. Ebenso muß die Busstation 300 so ausgebildet sein, dass sie Nachrichten, die sie von der Busstation 200 erhält und die für die Busstation 500 bestimmt sind, wiederholt. Dabei können verschiedene Vorgehensweisen verwendet werden. Zum einen kann vorgesehen sein, dass alle Busstationen, die mit mehr als einer Busstation in Verbindung stehen jede Nachricht, die sie an einem Eingang erhalten automatisch wieder auf den Ausgang geben, um so eine Verbreitung von Nachrichten in dem gesamten Bussystem sicherzustellen. Alternativ kann auch vorgesehen werden, dass die Busstationen eine Adresse der Nachricht betrachten und in Abhängigkeit von der Adresse die Nachricht an allen Ausgängen wiederholen, an nur einem Ausgang wiederholt oder gar nicht wiederholt. Im Fall der Busstation 200 könnte beispielsweise vorgesehen werden, dass die Busstation 200 jede Nachricht, die sie von der Busstation 100 erhält an beiden Ausgängen immer wiederholt. Alternativ könnte vorgesehen werden, dass die Busstation 200 alle Nachrichten wiederholt, es sei denn, sie erkennt, dass die Nachricht für die Busstation 200 bestimmt ist. Dies bedeutet, dass die Busstation 200 alle Nachrichten, die sie von der Busstation 100 erhält auf eine Adresse hin untersucht und dann, wenn die Adresse nicht den Wert "200" enthält, diesen an den Eingängen wiederholt. Weiterhin kann auch vorgesehen werden, dass die Busstation 200 weiß, welche Busstation mit welchem Ausgang der Busstation 200 verbunden ist. Wenn also von der Busstation 100 eine Nachricht mit der Adresse 400 gesendet würde, so würde die Busstation 200 diese Nachricht nur an dem Ausgang wiederholen, mit dem sie mit der Busstation 400 verbunden ist. Eine Nachricht für die Busstation 500 würde von der Busstation 200 an dem Ausgang wiederholt, der mit der Busstation 300 verbunden ist. Diese Vorgehensweise erfordert natürlich, dass die Busstation 200 Informationen über das gesamte nachfolgende Bussystem hat.

Die Busstationen 400, 500 und 600 sind nur mit einer einzigen Busstation verbunden und es ist daher nicht erforderlich, dass diese Busstationen Nachrichten wiederholen. Diese Busstationen können daher besonders einfach aufgebaut sein.

Da die Verbindung zwischen den einzelnen Busstationen durch optische Signalleitungen realisiert ist, können die Busstationen nicht über die Busleitungen mit Energie versorgt werden, da die durch eine optische Signalleitung transportierbare Energiemenge zu gering ist. Jede der Busstationen weist somit noch eine eigene Energieversorgung auf. Sofern ein Teil des Bussystems oder einzelne Busstationen für längere Zeit nicht an einem Datenaustausch mit anderen Busstationen teilnehmen, kann es vorteilhaft sein, bei einzelnen Busstationen einen Ruhezustand vorzusehen, um so den Energiebedarf der Busstation für einen bestimmten Zeitraum zu verringern. Dies ist besonders von Interesse, wenn einzelne Busstationen eine eigene lokale Energieversorgung, in der Regel durch eine Batterie oder ein sonstiges Speicherelement, aufweisen. Die Entscheidung darüber, in einen Ruhezustand zu gehen, kann entweder von der Busstation selber autonom getroffen werden oder aber in dem Bussystem ist eine übergeordnete Busstation vorgesehen, die in der Art eines Busmanagers darüber entscheidet, welche Busstation in den Ruhezustand gebracht wird.

Bei dem Versetzen einzelner Busstationen in einen Ruhezustand ist jedoch zu beachten, dass die Busstationen unterschiedliche Funktionen in dem gesamten Netzwerk wahrnehmen. Wenn die Busstationen 400, 500 und 600 vollständig ausgeschaltet werden, so sind damit diese Busstationen nicht mehr erreichbar bzw. diese Busstationen nehmen nicht mehr an irgendeinem Datenaustausch teil. Wenn jedoch die Station 200 in einen vollständigen Ruhezustand geschickt wird, so können beispielsweise ausgehend von der Busstation 100 die Stationen 300, 400 und 500 nicht mehr erreicht werden. Die Busstation 200 darf daher nur dann vollständig deaktiviert werden, wenn gleichzeitig sichergestellt ist, dass auch keine Kommunikation mehr zu den Busstationen 300, 400, 500 erforderlich ist.

Erfindungsgemäß wird daher vorgeschlagen, verschiedene Ruhezustände vorzusehen. In einem ersten Ruhezustand ist dabei die Busstation weitgehend deaktiviert, was im Fall der Busstation 200 bedeuten würde, dass die Busstation nicht mehr in der Lage ist, Nachrichten von der Busstation 100 an die Busstationen 300, 400 und 500 weiterzugeben. Weiterhin wird ein zweiter Ruhezustand vorgesehen, bei dem die Busstation weitgehend deaktiviert ist, aber noch die Weiterleitung von Signalen möglich ist. Im Fall der Busstation 200 bedeutet dies, dass die Busstation 200 weitgehend deaktiviert ist und keine Nachrichten empfangen oder senden kann aber nach wie vor in der Lage ist, Nachrichten von der Busstation 100 an die Busstationen 300, 400 und 500 weiterzugeben.

In der Figur 2 wird der interne Aufbau der Busstationen nach der Figur 1 erläutert. In der Figur 2 ist mit 1 eine der Busstationen nach der Figur 1 bezeichnet. Die Busstation 1 weist einen Eingang 2 und einen Ausgang 12 für eine optische Signalleitung auf. Sofern es sich um eine der Busstationen 100, 200 und 300 handelt, sind eine entsprechend größere Anzahl von Eingängen 2 und Ausgängen 12 für Signalleitungen vorgesehen. Die Signalleitungen sind mit einer Eingangsstufe 3 Ausgangsstufe 13 verbunden. Die Eingangsstufe 3 dient dazu, optische Signale, die über die Busleitung an die Busstation 1 gesandt werden in elektrische Signale umzuwandeln. Die Ausgangsstufe 13 dient dazu, elektrische Signale im Inneren der Busstation 1 in optische Signale umzusetzen, die dann über die Busleitung ausgesandt werden. Die Eingangsstufe 3 und die Ausgangsstufe 13 ist mit einer internen Datenleitung mit einer Adresserkennungsvorrichtung 4 verbunden. Die Adresserkennungsvorrichtung 4 ist über interne Datenleitungen mit einer Weiterverarbeitungsvorrichtung 5 verbunden.

In einem voll aktivierten Zustand sind alle in der Figur 2 gezeigten Teilvorrichtungen der Busstation 1 aktiviert. Die Eingangsstufe 3 empfängt Daten über die optische Signalleitung und wandelt sie in interne elektrische Signale zur Weiterverarbeitung in der Busstation 1 um. Weiterhin erhält die Ausgangsstufe 13 interne Signale der Busstation 1 und wandelt sie in entsprechende optische Signale um, die dann über die optische Signalleitung zu anderen Busstationen gesandt werden. Die Adresserkennungsvorrichtung 4 erhält von der Eingangsstufe 3 die Daten, die über die optische Signalleitung empfangen werden. Sie wertet diese Signale aus, um Adressen zu erkennen, die in den Nachrichten enthalten sind, die über die optischen Signalleitungen gesandt werden. In Abhängigkeit von den erkannten Adressen veranlaßt die Adresserkennungsvorrichtung 4 weitere Aktionen. Wenn die Adresserkennungsvorrichtung 4 erkennt, dass die Nachricht für eine andere Busstation bestimmt ist oder es sich um eine Nachricht handelt, die für alle Busstationen bestimmt ist, so veranlaßt sie die Ausgangsstufe 13 dazu, die Nachricht entsprechend zu wiederholen. Sofern die Adresserkennungsvorrichtung 4 erkennt, dass die Nachricht von Interesse für die Busstation 1 ist, veranlaßt sie eine entsprechende Weiterleitung der Nachricht an die Weiterverarbeitungsvorrichtung 5 zur weiteren internen Verarbeitung in der Busstation 1.

In der Figur 2 ist die Eingangsstufe 3 und Ausgangsstufe 13 als zwei separate Vorrichtungen gezeigt. Alternativ ist es jedoch auch möglich, dass es sich bei der Eingangsstufe und bei der Ausgangsstufe um eine einheitliche Vorrichtung handelt.

Erfindungsgemäß ist nun vorgesehen, dass die in der Figur 2 gezeigte Busstation mit unterschiedlichen Ruhezuständen betrieben werden kann. Bei einem ersten Ruhezustand sind sowohl die Weiterverarbeitungsschaltung 5 wie auch die Adreßerkennung 4 deaktiviert. In diesem Zustand ist die Busstation 1 nicht in der Lage, optische Signale, die am Eingang 2 eingehen, entsprechend am Ausgang 12 zu wiederholen. Die Busstation ist in diesem Zustand weitgehend deaktiviert, wodurch der Energieverbrauch der Busstation 1 sehr gering gehalten wird. Die Eingangsstufe 3 ist jedoch noch in der Lage zu erkennen, ob optische Signale am Eingang 2 der optischen Signalleitung vorliegen. Solange, wie keine optischen Signale am Eingang 2 der Signalleitung vorliegen, bleibt die Busstation 1 in diesem Ruhezustand und hält den Energieverbrauch minimal. Wenn jedoch die Eingangsstufe 3 erkennt, dass optische Signale vorliegen, so sendet sie ein entsprechendes Aufwecksignal an die Adreßerkennung 4 um die bis dahin inaktiv geschaltete Adresserkennungsvorrichtung 4 zu aktivieren. Der erste Ruhezustand wird somit verlassen und die Busstation 1 geht in den zweiten Ruhezustand, in dem auch die Ausgangsstufe 13 und die Adresserkennungsvorrichtung 4 aktiviert sind. Die Weiterverarbeitungsvorrichtung 5 ist jedoch noch deaktiviert, so dass auch in diesem zweiten Ruhezustand der Energieverbrauch der Busstation relativ gering ist. In diesem zweiten Zustand ist die Busstation 1 in der Lage, Adressen von Nachrichten, die über die Signalleitungen ausgetauscht werden zu erkennen. Die Adresserkennungsvorrichtung 4 entscheidet dann in Abhängigkeit von den erkannten Adressen, ob die Busstation 1 in dem zweiten Ruhezustand bleibt oder in einen anderen Zustand wechselt, der beispielsweise in einer vollständigen Aktivierung der Busstation 1 bestehen kann oder aber in einer Rückkehr zum ersten Ruhezustand. Wenn die Adresserkennungsvorrichtung 4 ausschließlich Adressen erkennt, die für andere Busstationen bestimmt sind, so veranlaßt sie die Ausgangsstufe 13 dazu, diese Nachrichten zu wiederholen, ohne dabei jedoch die Weiterverarbeitung 5 zu aktivieren. Erst wenn eine Adresse erkannt wird, die die Aktivierung der Weiterverarbeitungsschaltung 5 erfordert, veranlaßt die Adresserkennungsschaltung 4 ein entsprechendes Aufwecksignal zur Aktivierung der Weiterverarbeitungsvorrichtung 5. Eine entsprechende Adresse kann beispielsweise darin bestehen, dass explizit die Busstation 1 angesprochen wird. Weiterhin kann auch erkannt werden, dass eine Nachricht an alle Busstationen des Bussystems gesandt werden soll, was ebenfalls eine Aktivierung der Weiterverarbeitungsvorrichtung 5 erfordert. Weiterhin ist es auch möglich, dass der Busmanager eine Nachricht in das Bussystem gibt, die eine weitgehende Aktivierung oder Deaktivierung von Busstationen bewirken soll. Entsprechend würde dann die Adresserkennungsvorrichtung 4 eine Aktivierung oder Deaktivierung der Busstation 1 veranlassen.

Wie bereits ausgeführt, können durch einen Busmanager entsprechend Aktivierungs- oder Deaktivierungsbefehle zur Aktivierung oder Deaktivierung von Busstationen gesandt werden. Alternativ ist es auch möglich, dass jede Busstation aufgrund innerer Zustände von sich aus entscheidet, ob sie aktiviert oder deaktiviert sein möchte. Eine Möglichkeit für einen derartigen inneren Zustand einer Busstation kann beispielsweise darin bestehen, dass die Busstation überwacht, wie häufig Nachrichten im Bussystem verteilt werden bzw. wie häufig Nachrichten dabei sind, die für die Busstation selbst bestimmt sind. Wenn generell das Aufkommen an Nachrichten gering ist, kann die Busstation von sich aus eine weitgehende Deaktivierung der Busstation 1 entscheiden, d.h. es könnte auch die Adresserkennungsvorrichtung 4 deaktiviert werden. Wenn sehr selten Nachrichten auftreten, die für die Busstation 1 bestimmt sind, jedoch häufiger Nachrichten für andere Busstationen, so kann die Busstation beschließen, in den zweiten Ruhezustand zu gehen, in dem dann zwar die Weiterverarbeitungsvorrichtung 5 deaktiviert ist, jedoch die Adresserkennungsvorrichtung 4 nach wie vor aktiv geschaltet ist. Andere innere Zustände, die eine Aktivierung/Deaktivierung der Busstation 1 verursachen, können auch in entsprechenden Anforderungen beispielsweise eines Benutzers an die Busstation 1 bestehen.

In der Figur 3 wird im Detail die Eingangsstufe 3 gezeigt. Die Eingangsstufe 3 weist eine Fotodiode 30 auf, die einfallendes Licht 31 in einen Strom wandelt. Dieser Strom wird dann in einer Verstärkungsvorrichtung 10 verstärkt und einer Schwellwerterkennungseinrichtung 20 zugeführt. Wenn die Leistung des einfallendes Lichts 31 einen bestimmten Schwellwert überschreitet, so wird von dem Schwellwertdetektor 20 ein Aufwecksignal erzeugt, welches zur Aktivierung der Adressverarbeitungsvorrichtung 4 verwendet wird. Da die hier gezeigten Komponenten nur einen minimalen elektrischen Energiebedarf haben, läßt sich so ein Ruhezustand realisieren, bei dem der Energiebedarf der Busstation 1 sehr gering ist. In dem ersten Ruhezustand, in dem auch die Adresserkennungsvorrichtung 4 deaktiviert ist, ist nur die Eingangsstufe 3 aktiviert, wie sie in der Figur 3 gezeigt wird. Diese benötigt jedoch sehr wenig Energie, so dass der Energieverbrauch der Busstation 1 minimiert ist.

## Patentansprüche

1. Busstation (1) für ein optisches Bussystem mit einer Eingangsstufe (3), die einen Eingang (2) für eine optische Signalleitung des Bussystems aufweist, mit einer Adresserkennungsvorrichtung (4) zur Erkennung von Adressen in Bitfolgen, die als optische Signale über die Signalleitung gesandt werden, wobei ein erster Ruhezustand vorgesehen ist, in dem die Adresserkennungsvorrichtung (4) deaktiviert ist, und wobei in dem ersten Ruhezustand die Eingangsstufe (3) ein Aufwecksignal für die Adresserkennungsvorrichtung (4) erzeugt, wenn sie optische Signale auf der Signalleitung erkennt,
**dadurch gekennzeichnet, dass** ein zweiter Ruhezustand vorgesehen ist, **dass** in dem zweiten Ruhezustand die Adresserkennungsvorrichtung (4) aktiviert ist, und **dass** in dem zweiten Ruhezustand die Adresserkennungsvorrichtung (4) Bitfolgen auf Adressen untersucht und in Abhängigkeit von erkannten Adressen Weiterverarbeitungsvorrichtungen (5) aktiviert, die die Bitfolgen weiter verarbeiten.

2. Busstation nach Ansprüche 1, **dadurch gekennzeichnet, dass** Mittel vorhanden sind, die anhand von empfangenen Bitfolgen den ersten und/oder zweiten Ruhezustand aktivieren.

3. Busstation nach einem der vorhergehenden Ansprüche, **dadurch gekennzeichnet, dass** Mittel vorhanden sind, die anhand von internen Zuständen der Busstation (1) den ersten und/oder zweiten Ruhezustand aktivieren.

4. Busstation nach Anspruch 3, **dadurch gekennzeichnet, dass** sich die internen Zustände daraus ergeben, **dass** die Busstation (1) für eine bestimmte Zeit keine optischen Signalen von den Busleitungen (2) erhalten hat.

5. Busstation nach einem der vorhergehenden Ansprüche, **dadurch gekennzeichnet, dass** eine Ausgangsstufe (13) mit einem Ausgang (12) für eine optische Signalleitung vorgesehen ist, und **dass** in dem zweiten Ruhezustand optische Signale, die an dem Eingang (2) eingehen an dem Ausgang (12) wiederholt werden.

## Claims

1. Bus station (1) for an optical bus system, said bus station having an input stage (3) which has an input (2) for an optical signal line of the bus system, having an address detection apparatus (4) for detecting addresses in bit strings which are sent as optical signals via the signal line, a first quiescent state in which the address detection apparatus (4) is deactivated being provided, and the input stage (3) generating a wake-up signal for the address detection apparatus (4) in the first quiescent state if it detects optical signals on the signal line, **characterized in that** a second quiescent state is provided, **in that** the address detection apparatus (4) is activated in the second quiescent state, and **in that**, in the second quiescent state, the address detection apparatus (4) examines bit strings for addresses and activates, on the basis of detected addresses, further processing apparatuses (5) which process the bit strings further.

2. Bus station according to Claim 1, **characterized in that** means which use received bit strings to activate the first and/or second quiescent state are provided.

3. Bus station according to one of the preceding claims, **characterized in that** means which use internal states of the bus station (1) to activate the first and/or second quiescent state are provided.

4. Bus station according to Claim 3, **characterized in that** the internal states result from the fact that the bus station (1) has not received any optical signals from the bus lines (2) for a particular period of time.

5. Bus station according to one of the preceding claims, **characterized in that** an output stage (13) having an output (12) for an optical signal line is provided, and **in that** optical signals which arrive at the input (2) are repeated at the output (12) in the second quiescent state.

## Revendications

1. Station de bus (1) pour un système de bus optique comprenant un étage d'entrée (3) ayant une entrée (2) pour une ligne optique de signaux du système de bus, un dispositif de reconnaissance d'adresse (4) pour reconnaître les adresses de suites de bit émises comme signaux optiques par la ligne de signaux,
un état de repos étant prévu pendant lequel le dispositif de reconnaissance d'adresse (4) est neutralisé, et
dans le premier état de repos, l'étage d'entrée (3) génère un signal de réveil pour le dispositif de reconnaissance d'adresse (4) s'il reconnaît les signaux optiques sur la ligne de signaux,
**caractérisée par**
un second état de repos, et
dans ce second état de repos, le dispositif de reconnaissance d'adresse (4) est activé, et
dans le second état de repos, le dispositif de reconnaissance d'adresse (4) examine les suites de bit pour déterminer les adresses et en fonction des adresses reconnues, il active des dispositifs de poursuite de traitement (5) qui poursuivent le traitement des suites de bit.

2. Station de bus selon la revendication 1,
**caractérisée par**
des moyens qui activent le premier et/ou le second état de repos à l'aide de suites de bit reçues.

3. Station de bus selon l'une quelconque des revendications précédentes,
**caractérisée par**
des moyens qui à l'aide des états internes de la station de bus (1) activent le premier et/ou le second état de repos.

4. Station de bus selon la revendication 3,
**caractérisée en ce que**
les états internes résultent de ce que la station de bus (1) n'a pas reçu de signaux optiques des lignes de bus (2) pendant une durée définie.

5. Station de bus selon l'une quelconque des revendications précédentes,
**caractérisée par**
un étage de sortie (13) muni d'une sortie (12) pour une ligne optique de signaux, et
dans le second état de repos, les signaux optiques arrivant sur l'entrée (2) sont répétés à la sortie (12).
